# FASCICULE DE BREVET EUROPEEN

(11) **EP 3 272 064 B1**
(45) Date de publication et mention de la délivrance du brevet: **01.05.2019**
(21) Numéro de dépôt: 16713556.5
(22) Date de dépôt: 17.03.2016
(51) Int. Cl.: H04L 9/32

(54) **AUTHENTIFICATION CHAINEE PAR L'INTERMEDIAIRE DE DISPOSITIFS CONNECTES**
VERKETTETE AUTHENTIFIZIERUNG ÜBER VERBUNDENE VORRICHTUNGEN
CHAINED AUTHENTICATION VIA CONNECTED DEVICES

(30) Priorité: 20.03.2015 FR 1552306
(43) Date de publication de la demande: 24.01.2018
(73) Titulaire: Inside Secure, 13590 Meyreuil (FR)
(72) Inventeur: DECUGIS, Sébastien, 13640 La Roque D'Antheron (FR)
(74) Mandataire: de Jong, Jean Jacques
(86) Numéro de dépôt international: PCT/FR2016/050597
(87) Numéro de publication internationale: WO 2016/151218

(56) Documents cités:
- US-A1- 2006 224 889
- US-A1- 2011 145 900
- US-B1- 8 977 847

## Description

### Domaine technique

L'invention est relative aux techniques d'authentification de dispositifs électroniques interconnectés.

### Arrière-plan

Certains appareils sont conçus pour être équipés de dispositifs amovibles pouvant être des périphériques ou des consommables. Dans certaines situations, pour des raisons de sécurité ou de qualité de prestation, le fabricant de l'appareil peut souhaiter que les dispositifs amovibles soient fournis par une source autorisée, et refuser d'utiliser un dispositif amovible de source inconnue. Une telle situation est, par exemple, celle d'une imprimante et de ses cartouches d'encre.

Dans ce cas, l'appareil et les dispositifs amovibles peuvent chacun comprendre un circuit cryptographique utilisant un certificat d'authenticité. L'appareil peut alors procéder à une authentification de chacun des dispositifs amovibles à la mise sous tension, et prendre des mesures palliatives avec les dispositifs dont l'authentification échoue.

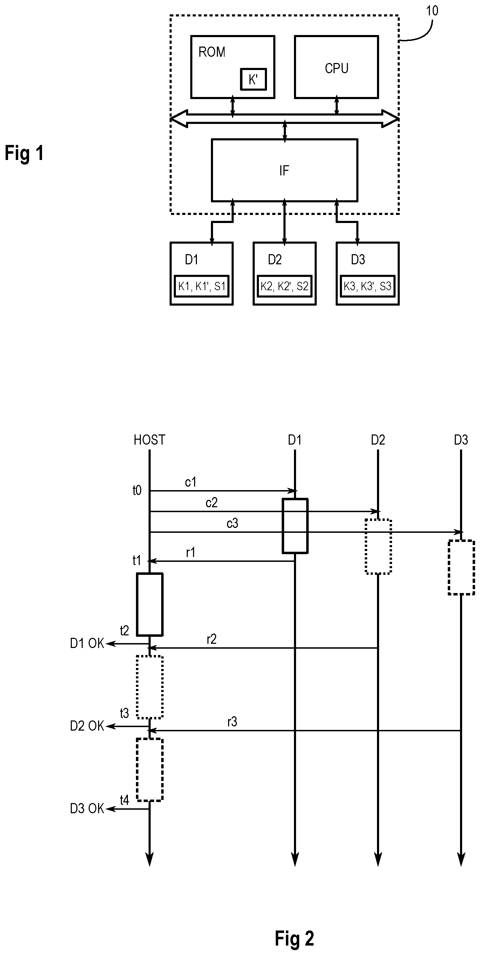

La figure 1 est un schéma de principe électronique d'un appareil 10 connecté à plusieurs dispositifs périphériques D1 à D3. L'appareil 10 peut être une imprimante et les dispositifs D1-D3 des cartouches d'encre de différentes couleurs utilisables simultanément. L'appareil peut comprendre un processeur CPU connecté à des mémoires et à des interfaces par un bus B. Une mémoire à lecture seule ROM peut contenir une clé K' servant aux opérations d'authentification. Cette clé K' peut être la clé publique d'une clé privée maîtresse K du fabricant. Une interface IF peut être conçue pour communiquer avec les dispositifs D1 à D3. Chaque dispositif périphérique à authentifier peut contenir une clé privée K1 à K3, la clé publique correspondante K1' à K3', et une preuve d'authenticité de la clé publique, ou certificat d'authenticité, sous la forme d'une signature SI à S3 de la clé publique par la clé maîtresse K.

Les opérations d'authentification étant relativement complexes, elles peuvent être particulièrement longues si le nombre de dispositifs à authentifier est grand et que les ressources de calcul de l'appareil sont limitées.

Le document de publication de brevet US 8,977,847 B1, accordé à A. Juels, expose un groupe de serveurs secondaires coopérant afin de calculer le résultat de la vérification d'une réponse soumise par un dispositif à authentifier.

Le document de publication de demande de brevet US 2011/0145900 A1, soumis par W. Chern, expose la délégation d'un procédé d'authentification de la part d'un serveur principal vers un serveur secondaire, employant un protocole de type défi-réponse.

Le document de publication de demande de brevet US 2006/0224889 A1, soumis par C. A. Adkins et T. L. Strunk, expose l'authentification d'un dispositif consommable tel qu'une cartouche d'encre pour une imprimante.

### Résumé

On prévoit de façon générale un procédé d'authentification d'une pluralité de dispositifs esclaves connectés à un dispositif maître, comprenant les étapes consistant à générer et envoyer par le dispositif maître un défi respectif à chaque dispositif esclave ; dans chaque dispositif esclave, générer une réponse au défi respectif et la transmettre au dispositif maître ; renvoyer par le dispositif maître la réponse du dispositif esclave de rang i au dispositif esclave de rang i+1, où i varie de 1 à N-1, et N est le nombre de dispositifs esclaves ; vérifier par le dispositif maître la réponse du dispositif esclave de rang N ; si la réponse vérifiée par le dispositif maître est valide, authentifier le dispositif esclave de rang N ; et si la réponse vérifiée par un dispositif de rang j est valide, authentifier le dispositif de rang j-1, où j décroît de N à 2. Le dispositif maître peut être une imprimante et les dispositifs esclaves des cartouches d'encre.

On prévoit également un procédé d'authentification d'une pluralité de dispositifs consommables connectés à un appareil, comprenant les étapes suivantes : générer et envoyer par l'appareil un défi respectif à chaque dispositif consommable ; dans chaque dispositif consommable, générer une réponse au défi respectif et la transmettre à l'appareil ; vérifier par l'appareil la réponse de l'un des dispositifs consommables ; renvoyer par l'appareil les réponses restantes à des dispositifs consommables respectifs différents de ceux ayant généré les réponses ; et vérifier par chaque dispositif consommable la réponse qui lui a été renvoyée par l'appareil et transmettre le résultat de la vérification à l'appareil.

Le dispositif consommable peut être une cartouche d'encre authentifiable par une imprimante.

### Description sommaire des dessins

Des modes de réalisation seront exposés dans la description suivante, faite à titre non limitatif en relation avec les figures jointes parmi lesquelles :
- la figure 1, précédemment décrite, est un schéma de principe électronique d'un appareil connecté à plusieurs dispositifs périphériques ;
- la figure 2 est un diagramme temporel illustrant un exemple de séquence d'authentification typique de plusieurs dispositifs périphériques ; et
- la figure 3 est un diagramme temporel illustrant un exemple de mise en oeuvre d'une authentification chaînée de plusieurs dispositifs périphériques.

### Description de modes de réalisation

La figure 2 est un diagramme temporel illustrant un exemple de déroulement d'opérations d'authentification pouvant avoir lieu typiquement dans un appareil du type de la figure 1 à la mise sous tension. Les opérations effectuées par le processeur hôte (HOST) de l'appareil et par les dispositifs périphériques D1-D3 à authentifier sont portées sur des axes verticaux respectifs sous la forme de rectangles dont les longueurs sont illustratives des durées des opérations. Les rectangles sont également dessinés avec des traits différents pour reconnaître les opérations associées aux différents dispositifs périphériques. Les communications entre les éléments sont représentées par des flèches horizontales.

A partir d'un instant t0, un programme exécuté par l'hôte démarre une procédure d'authentification des dispositifs périphériques. L'hôte génère un défi respectif cl à c3 pour chacun des dispositifs D1 à D3. Les défis peuvent être différents et consister en des nombres aléatoires de taille normalisée. Les défis cl à c3 sont transmis séquentiellement aux dispositifs D1 à D3, puis l'hôte attend la disponibilité des réponses.

Chacun des dispositifs D1 à D3 calcule une réponse r1 à r3 au défi reçu selon un mécanisme connu pouvant être normalisé. Cette réponse inclut, par exemple, une signature calculée sur le défi reçu, un défi réponse, et un identifiant à l'aide de la clé secrète K1 à K3 contenue dans le dispositif. Les réponses calculées peuvent être stockées par les dispositifs en attente de lecture par l'hôte.

A partir d'un instant t1, l'hôte lit la réponse r1 du dispositif D1 et vérifie sa validité. Cette vérification peut inclure des étapes consistant, par exemple, à authentifier la signature véhiculée dans la réponse par la clé publique K1' du dispositif, à authentifier la clé publique K1' par le certificat SI du dispositif, et à authentifier le certificat SI par la clé publique K' connue de l'hôte.

En pratique, l'hôte peut sonder périodiquement le dispositif D1 à partir de l'instant t0 pour connaître la disponibilité de la réponse r1. Si la réponse n'est pas prête lors d'un sondage courant, le sondage est réitéré. Si la réponse est prête, elle est lue et l'hôte procède à la vérification.

A partir d'un instant t2, l'hôte a fini la vérification de la réponse r1. Si la réponse r1 est valide, l'hôte peut enregistrer que le dispositif D1 est authentique (D1 OK). L'hôte lit alors la réponse r2 produite par le dispositif suivant D2, et procède à la vérification de cette réponse.

A partir d'un instant t3, l'hôte a fini la vérification de la réponse r2. Si la réponse r2 est valide, l'hôte peut enregistrer que le dispositif D2 est authentique (D2 OK). L'hôte lit alors la réponse r3 produite par le dernier dispositif D3, et procède à la vérification de cette réponse.

Enfin, à un instant t4, l'hôte a fini la vérification de la réponse r3. Si la réponse r3 est valide, l'hôte peut enregistrer que le dernier dispositif D3 est authentique (D3 OK).

Si la vérification échoue pour un dispositif quelconque, diverses mesures peuvent être prises selon le contexte et la nature du dispositif incriminé, allant du fonctionnement bridé de l'appareil sans le dispositif incriminé, au refus total de fonctionner.

Les calculs de signature utilisés pour générer et vérifier les réponses consistent généralement en des calculs cryptographiques relativement complexes sur des nombres grands pouvant atteindre plusieurs centaines de bits. Le système hôte peut être de type embarqué et de faible coût, disposant de faibles ressources de calcul, comme dans le cas de certaines imprimantes. Dans ce cas, la somme des opérations de vérification, proportionnelle au nombre de dispositifs à authentifier (par exemple huit cartouches pour certaines imprimantes), peut atteindre une durée de plusieurs secondes, ce qui peut être rédhibitoire pour la phase de mise sous tension de l'appareil.

Comme le montre la figure 2, chaque dispositif à authentifier est en pratique conçu pour générer des réponses aux défis reçus sur la base d'une clé secrète locale, et met donc en oeuvre des fonctions cryptographiques. Les fonctions cryptographiques peuvent en pratique être offertes par un microcircuit dédié peu coûteux, disposant d'un microcontrôleur associé à un accélérateur matériel, ou coprocesseur, dédié aux fonctions cryptographiques. Les circuits de la famille VaultIC™ commercialisés par Inside Secure en sont des exemples. Même si le microcontrôleur peut être moins puissant que le processeur hôte, le coprocesseur offre des performances telles que les signatures peuvent être calculées au moins aussi vite que par le processeur hôte.

Pour accélérer la phase d'authentification de plusieurs dispositifs, on propose ci-après d'utiliser les ressources de calcul des microcircuits dédiés des dispositifs périphériques afin de décharger le processeur hôte. Le procédé exposé ci-après implique la distribution d'étapes de vérification sur des dispositifs périphériques pouvant être de source inconnue. Le procédé établit en outre une chaîne de confiance garantissant que les résultats de vérification pris en compte sont produits par des dispositifs ayant eux-mêmes été authentifiés.

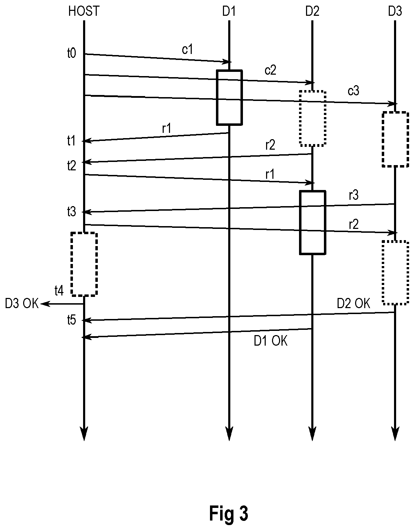

La figure 3 est un diagramme temporel illustrant un exemple de mise en oeuvre d'une telle phase d'authentification chaînée et distribuée, utilisant le même cadre et notations que la figure 2.

A partir d'un instant t0, comme à la figure 2, un programme exécuté par l'hôte démarre une procédure d'authentification des dispositifs périphériques. L'hôte génère un défi respectif cl à c3 pour chacun des dispositifs D1 à D3. Les défis cl à c3 sont transmis séquentiellement aux dispositifs D1 à D3, puis l'hôte attend la disponibilité des réponses.

Comme à la figure 2, chacun des dispositifs D1 à D3 calcule une réponse r1 à r3 au défi reçu. Ces réponses peuvent être stockées par les dispositifs en attente de lecture par l'hôte.

A partir d'un instant t1, l'hôte lit la réponse r1 du dispositif D1. Au lieu de lancer un calcul de vérification de la réponse, la réponse r1 est mise en attente de la disponibilité d'un autre des dispositifs, par exemple D2.

A un instant t2, l'hôte lit la réponse r2 produite par le dispositif D2. Cette lecture implique que le dispositif D2 est disponible. L'hôte renvoie aussitôt la réponse r1 au dispositif D2 pour que celui-ci effectue la vérification. La réponse r2 est mise en attente de la disponibilité d'un autre des dispositifs, ici D3.

La vérification dans le dispositif D2 est faite de la même manière que dans l'hôte. Le résultat de la vérification est stocké temporairement dans le dispositif D2 pour être lu par l'hôte le moment venu.

Ainsi, le dispositif périphérique est modifié pour contenir la clé publique K' en plus de ses clés K2 et K2', et pour effectuer les opérations de vérification. Les opérations peuvent être mises en oeuvre par une modification du programme du microcircuit. La réponse renvoyée par l'hôte peut être incluse dans un message identifiant la nature des opérations à effectuer par le dispositif.

A un instant t3, l'hôte lit la réponse r3 produite par le dispositif D3. Cette lecture implique que le dispositif D3 est disponible. L'hôte renvoie aussitôt la réponse r2 au dispositif D3 pour que celui-ci effectue la vérification.

Pour démarrer la chaîne de confiance, l'hôte se charge de vérifier la réponse r3 du dernier dispositif D3. Comme cela est représenté, la vérification de la réponse r3 par l'hôte est effectuée sensiblement en parallèle avec la vérification des réponses r1 et r2 par les dispositifs D2 et D3.

La durée totale de la phase d'authentification est ainsi réduite sensiblement à la durée la plus longue d'une vérification, augmentée du temps des transferts des réponses et résultats entre l'hôte et les dispositifs.

A un instant t4, l'hôte a fini la vérification de la réponse r3 et enregistre en principe que le dispositif D3 est authentique (D3 OK).

A un instant t5, l'hôte lit le résultat de vérification D2 OK produit par le dispositif D3. Le dispositif D3 ayant été authentifié, l'hôte peut faire confiance au résultat qu'il produit. Ce résultat authentifie en principe le dispositif D2.

Enfin, l'hôte lit le résultat de vérification D1 OK produit par le dispositif D2. Le dispositif D2 ayant été authentifié, l'hôte peut faire confiance au résultat qu'il produit, et ce résultat authentifie en principe le dispositif D1.

Ainsi, chacun des dispositifs D3 à D1 est authentifié à tour de rôle par l'hôte ou par un dispositif ayant lui-même été authentifié selon une chaîne de confiance partant de l'hôte.

Un dispositif fraudeur pourrait être conçu pour toujours fournir à l'hôte un résultat de vérification valide. Mais cette tentative est déjouée par le fait que le dispositif fraudeur serait détecté comme non-authentique à la vérification de sa réponse au défi, vérification qui est faite par un autre dispositif authentifié ou l'hôte. Ainsi, le résultat que produirait le dispositif fraudeur ne serait pas pris en compte. De plus, ce résultat concerne un autre dispositif et non le dispositif fraudeur lui-même.

Une passe du procédé permet de détecter le premier dispositif non-authentique de la chaîne. La passe est alors arrêtée, puisque l'authentification des dispositifs suivants de la chaîne peut être compromise. Dans l'exemple de la figure 3, si le dispositif D3 n'est pas authentique, cela est détecté par l'hôte. L'hôte ne peut alors pas faire confiance au dispositif D3 quant au résultat qu'il fournit pour le dispositif D2, et ainsi de suite.

Si l'on souhaite détecter tous les dispositifs non-authentiques, on peut effectuer plusieurs passes du procédé, en démarrant la chaîne sur un dispositif différent à chaque fois. D'ailleurs, pour déjouer certains types d'attaques, la première passe peut également être conçue pour démarrer la chaîne sur un dispositif différent à chaque fois, par exemple choisi de manière aléatoire.

Le procédé qui vient d'être décrit peut être utilisé avec un nombre quelconque de dispositifs interconnectés. De façon générale un dispositif maître peut être désigné pour authentifier N dispositifs esclaves. Alors, le dispositif maître renvoie la réponse du dispositif esclave de rang i au dispositif esclave de rang i+1, pour i variant de 1 à N-1, et le dispositif maître vérifie la réponse du dispositif esclave de rang N. Si la réponse vérifiée par le dispositif maître est valide, le dispositif esclave de rang N est authentique. Alors, pour j décroissant de N à 2, si la réponse vérifiée par le dispositif de rang j est valide, le dispositif de rang j-1 est authentique.

Le procédé peut être utilisé dans de nombreux types d'appareils (dispositifs maîtres) utilisant des dispositifs consommables (esclaves). On a cité une imprimante et ses cartouches d'encre. D'autres exemples sont la machine à boissons chaudes et ses recharges, la table de traçage et ses stylos, un système de gestion de paramètres et ses capteurs, etc.

## Revendications

1. Procédé d'authentification d'une pluralité de dispositifs esclaves (D1-D3) connectés à un dispositif maître (CPU), comprenant les étapes suivantes :
• générer et envoyer par le dispositif maître un défi respectif (cl-c3) à chaque dispositif esclave ;
• dans chaque dispositif esclave, générer une réponse (rl-r3) au défi respectif et la transmettre au dispositif maître ;
**caractérisé en ce qu'**il comprend les étapes suivantes :
• renvoyer par le dispositif maître la réponse du dispositif esclave de rang i au dispositif esclave de rang i+1, où i varie de 1 à N-1, et N est le nombre de dispositifs esclaves ;
• vérifier par le dispositif maître la réponse du dispositif esclave de rang N ;
• si la réponse vérifiée par le dispositif maître est valide, authentifier le dispositif esclave de rang N ; et
• si la réponse vérifiée par un dispositif de rang j est valide, authentifier le dispositif de rang j-1, où j décroît de N à 2.

2. Procédé selon la revendication 1, dans lequel le dispositif maître est une imprimante et les dispositifs esclaves sont des cartouches d'encre.

3. Procédé selon la revendication 1, dans lequel le dispositif maître est un appareil et les dispositifs esclaves sont des dispositifs consommables de l'appareil.

4. Procédé d'authentification d'une pluralité de dispositifs consommables (D1-D3) connectés à un appareil (CPU), comprenant les étapes suivantes :
• générer et envoyer par l'appareil un défi respectif (cl-c3) à chaque dispositif consommable ;
• dans chaque dispositif consommable, générer une réponse (rl-r3) au défi respectif et la transmettre à l'appareil ;
**caractérisé en ce qu'**il comprend les étapes suivantes :
• vérifier par l'appareil la réponse (r3) de l'un des dispositifs consommables (D3) ;
• renvoyer par l'appareil les réponses restantes à des dispositifs consommables respectifs différents de ceux ayant généré les réponses ; et
• vérifier par chaque dispositif consommable (D2, D3) la réponse qui lui a été renvoyée par l'appareil et transmettre le résultat de la vérification à l'appareil.

5. Procédé selon la revendication 4, dans lequel l'appareil est une imprimante et les dispositifs consommables sont des cartouches d'encre.

## Patentansprüche

1. Verfahren zur Authentifizierung einer Vielzahl von Slave-Vorrichtungen (D1-D3), die an eine Master-Vorrichtung (CPU) angeschlossen sind, umfassend die folgenden Schritte:
• Erzeugen und Senden, durch die Master-Vorrichtung, jeweils einer Herausforderung (c1-c3) an jede Slave-Vorrichtung;
• in jeder Slave-Vorrichtung, Erzeugen einer Erwiderung (r1-r3) auf die jeweilige Herausforderung und Übertragen dieser an die Master-Vorrichtung; **dadurch gekennzeichnet, dass** es die folgenden Schritte umfasst:
• Verweisen, durch die Master-Vorrichtung, der Erwiderung der Slave-Vorrichtung vom Rang i an die Slave-Vorrichtung vom Rang i+1, wobei i von 1 bis N-1 variiert und N für die Anzahl an Slave-Vorrichtungen steht;
• Überprüfen, durch die Master-Vorrichtung, der Erwiderung der Slave-Vorrichtung vom Rang N;
• wenn die von der Master-Vorrichtung überprüfte Erwiderung gültig ist, Authentifizieren der Slave-Vorrichtung vom Rang N; und
• wenn die von einer Vorrichtung vom Rang j überprüfte Erwiderung gültig ist, Authentifizieren der Vorrichtung vom Rang j-1, wobei sich j um N auf 2 verringert.

2. Verfahren nach Anspruch 1, wobei die Master-Vorrichtung ein Drucker ist und die Slave-Vorrichtungen Tintenpatronen sind.

3. Verfahren nach Anspruch 1, wobei die Master-Vorrichtung eine Einrichtung ist und die Slave-Vorrichtungen Vorrichtungen sind, die vom Gerät verbraucht werden können.

4. Verfahren zur Authentifizierung einer Vielzahl von verbrauchbaren Vorrichtungen (D1-D3), die an eine Einrichtung (CPU) angeschlossen sind, umfassend die folgenden Schritte:
• Erzeugen und Senden, durch die Einrichtung, jeweils einer Herausforderung (c1-c3) an jede verbrauchbare Vorrichtung;
• in jeder verbrauchbaren Vorrichtung, Erzeugen einer Erwiderung (r1-r3) auf die jeweilige Herausforderung und Übertragen dieser an die Einrichtung;
**dadurch gekennzeichnet, dass** es die folgenden Schritte aufweist:
• Überprüfen, durch die Einrichtung, der Erwiderung (r3) von einer der verbrauchbaren Vorrichtungen (D3);
• Verweisen, durch die Einrichtung, der verbleibenden Erwiderungen an jeweilige verbrauchbare Vorrichtungen, die verschieden von denjenigen sind, die die Erwiderungen erzeugt haben; und
• Überprüfen, durch jede verbrauchbare Vorrichtung (D2, D3), der Erwiderung, die an diese von der Einrichtung verwiesen wurde, und Übertragen des Ergebnisses der Überprüfung an die Einrichtung.

5. Verfahren nach Anspruch 4, wobei die Einrichtung ein Drucker ist und die verbrauchbaren Vorrichtungen Tintenpatronen sind.

## Claims

1. A method for authenticating a plurality of slave devices (D1-D3) connected to a master device (CPU), the method comprising:
generating and sending, by the master device, a respective challenge (c1-c3) to each slave device;
in each slave device, generating a response (r1-r3) to the respective challenge and transmitting the response to the master device;
**characterized in that** it comprises the following steps:
returning, by the master device, the response of the slave device of rank i to the slave device of rank i + 1, where i varies from 1 to N-1, N being the number of slave devices;
verifying, by the master device, the response of the slave device of rank N;
if the response verified by the master device is valid, authenticating the slave device of rank N; and
if the response verified by a device of rank j is valid, authenticating the device of rank j-1, where j decreases from N to 2.

2. The method of claim 1, wherein the master device is a printer and the slave devices are ink cartridges.

3. The method of claim 1, wherein the master device is an apparatus and the slave devices are consumable devices of the apparatus.

4. A method for authenticating a plurality of consumable devices (D1-D3) connected to an apparatus (CPU), the method comprising:
generating and sending, by the apparatus, a respective challenge (c1-c3) to each consumable device;
in each consumable device, generating a response (r1-r3) to the respective challenge and transmitting the response to the apparatus;
**characterized in that** it comprises the following steps:
verifying, by the apparatus, the response (r3) of one of the consumable devices (D3);
returning, by the apparatus, the remaining responses to respective consumable devices distinct from those that generated the responses; and
verifying, by each consumable device (D2, D3), the response returned thereto by the apparatus and transmitting the result of the verification to the apparatus.

5. The method of claim 4, wherein the apparatus is a printer and the consumable devices are ink cartridges.
